# EUROPEAN PATENT APPLICATION

(11) **EP 4 761 162 A1**
(43) Date of publication of application: **17.06.2026**
(21) Application number: 23948771.3
(22) Date of filing: 11.08.2023
(51) Int. Cl.: H04L 5/00

(54) **CHANNEL STATE INFORMATION (CSI) REPORT CONFIGURATION PROCESSING METHOD, COMMUNICATION DEVICE, AND COMMUNICATION SYSTEM**

(71) Applicant: Beijing Xiaomi Mobile Software Co., Ltd., Beijing 100085 (CN)
(72) Inventor: WU, Shijuan, Beijing 100085 (CN)
(74) Representative: Dehns Germany Partnerschaft mbB
(86) International application number: PCT/CN2023/112772
(87) International publication number: WO 2025/035336

(57) **Abstract**

Embodiments of the present disclosure provide a channel state information (CSI) report configuration processing method and apparatus, a communication device, a communication system, and a storage medium. The method comprises: a network device sends a media access control (MAC) control element (CE) to a terminal, wherein the MAC CE comprises a first MAC CE, the first MAC CE carries first information, and the first information is used for indicating activation or deactivation of a sub-configuration of a CSI report configuration. According to the technical solution provided by the embodiments of the present disclosure, activation or deactivation having finer granularity is realized for a CSI report configuration, so that the measurement power consumption of a terminal is reduced, and the bit overhead is saved.

## Description

### TECHNICAL FIELD

The disclosure relates to the field of communication technology, and particularly to a method for processing a channel state information (CSI) report configuration, a communication device, and a communication system.

### BACKGROUND

A concept of network energy saving is raised with the development of communication technology. Network energy saving may achieve green environmental protection. However, how to achieve the network energy saving while ensuring a wireless communication quality of devices is also a problem that needs to be solved.

### SUMMARY

With the development of technology, energy-saving technology for channel state information (CSI) in the context of network energy saving is raised.

Embodiments of the disclosure provide a method for processing a CSI report configuration, a communication device, and a communication system.

According to a first aspect of embodiments of the disclosure, a method for processing a CSI report configuration is provided. The method includes: sending, by a network device, a media access control (MAC) control element (CE) to a terminal, in which the MAC CE includes a first MAC CE, the first MAC CE carries first information, the first information indicates activation or deactivation of a sub-configuration of the CSI report configuration.

According to a second aspect of embodiments of the disclosure, a method for processing a CSI report configuration is provided. The method includes: receiving an MAC CE sent by a network device, in which the MAC CE includes a first MAC CE, the first MAC CE carries first information, the first information indicates activation or deactivation of a sub-configuration corresponding to the CSI report configuration.

According to a third aspect of embodiments of the disclosure, a method for processing a CSI report configuration is provided. The method includes: a network device sending an MAC CE to a terminal, in which the MAC CE includes a first MAC CE, the first MAC CE carries first information, the first information indicates activation or deactivation of a sub-configuration of the CSI report configuration.

According to a fourth aspect of embodiments of the disclosure, a network device is provided. The network device includes: a sending module, configured to send an MAC CE to a terminal, in which the MAC CE includes a first MAC CE, the first MAC CE carries first information, the first information indicates activation or deactivation of a sub-configuration of a CSI report configuration.

According to a fifth aspect of embodiments of the disclosure, a terminal is provided. The terminal includes: a receiving module, configured to receive an MAC CE sent by a network device, in which the MAC CE includes a first MAC CE, the first MAC CE carries first information, the first information indicates activation or deactivation of a sub-configuration corresponding to a CSI report configuration.

According to a sixth aspect of embodiments of the disclosure, a communication system is provided. The communication system includes: a terminal and a network device, in which the network device is configured to implement the method provided in the first aspect, and the terminal is configured to implement the method provided in the second aspect.

According to a seventh aspect of embodiments of the disclosure, a communication device is provided. The communication device includes one or more processors. The one or more processors are configured to call instructions to cause the communication device to perform the method provided in the first aspect or the second aspect.

According to an eighth aspect of embodiments of the disclosure, a storage medium is provided. The storage medium stores instructions that, when running on a communication device, cause the communication device to perform the method provided in the first aspect or the second aspect.

The technical solution provided by embodiments of the present disclosure realizes activation or deactivation based on the sub-configuration, and thus realizes activation or deactivation at a finer granularity than the CSI report configuration, which may reduce measurement power consumption of the terminal and save bit overhead.

It is noted that the above general description and the following detailed description are merely illustrative and explanatory, which do not constitute a limitation on embodiments of the present disclosure.

### BRIEF DESCRIPTION OF THE DRAWINGS

The accompanying drawings, which are incorporated in and constitute a part of the description, illustrate embodiments consistent with the present disclosure and, serve to explain the principles of embodiments of the present disclosure together with the description.
FIG. 1A is a schematic diagram illustrating an architecture of a communication system according to an embodiment of the disclosure.
FIG. 1B is a schematic diagram illustrating a structure of an MAC CE according to an embodiment of the disclosure.
FIG. 2 is a schematic diagram illustrating an interaction of a method for processing a CSI report configuration according to an embodiment of the disclosure.
FIG. 3A is a flowchart illustrating a method for processing a CSI report configuration according to an embodiment of the disclosure.
FIG. 3B is a flowchart illustrating a method for processing a CSI report configuration according to an embodiment of the disclosure.
FIG. 4A is a flowchart illustrating a method for processing a CSI report configuration according to an embodiment of the disclosure.
FIG. 4B is a flowchart illustrating a method for processing a CSI report configuration according to an embodiment of the disclosure.
FIG. 5 is a schematic diagram illustrating an interaction of a method for processing a CSI report configuration according to an embodiment of the disclosure.
FIG. 6A is a schematic diagram illustrating a structure of an MAC CE in a first format according to an embodiment of the disclosure.
FIG. 6B is a schematic diagram illustrating a structure of an MAC CE in a second format according to an embodiment of the disclosure.
FIG. 6C is a schematic diagram illustrating a structure of an MAC CE in a third format according to an embodiment of the disclosure.
FIG. 6D is a schematic diagram illustrating a structure of an MAC CE in a fourth format according to an embodiment of the disclosure.
FIG. 6E is a schematic diagram illustrating a structure of an MAC CE in a fifth format according to an embodiment of the disclosure.
FIG. 6F is a schematic diagram illustrating a structure of an MAC CE in a fifth format according to an embodiment of the disclosure.
FIG. 7A is a schematic diagram illustrating a structure of a terminal according to an embodiment of the disclosure.
FIG. 7B is a schematic diagram illustrating a structure of a network device according to an embodiment of the disclosure.
FIG. 8A is a schematic diagram illustrating a structure of a terminal according to an embodiment of the disclosure.
FIG. 8B is a schematic diagram illustrating a structure of a communication device according to an embodiment of the disclosure.

### DETAILED DESCRIPTION

Embodiments of the disclosure provide a method and an apparatus for processing a channel state information (CSI) report configuration, a communication device, a communication system, and a storage medium.

In a first aspect, embodiments of the disclosure provide a method for processing a CSI report configuration. The method includes: sending, by a network device, a media access control (MAC) control element (CE) to a terminal, in which the MAC CE includes a first MAC CE, the first MAC CE carries first information, the first information indicates activation or deactivation of a sub-configuration of the CSI report configuration.

In the above embodiment, the network device sends the first MAC CE to the terminal and uses the first information in the first MAC CE to indicate the activation or deactivation of the sub-configuration of the CSI report configuration, thus realizing activation or deactivation based on the sub-configuration, and realizing activation or deactivation at a finer granularity than the CSI report configuration, which may reduce measurement power consumption of the terminal and save bit overhead.

In combination with some embodiments of the first aspect, in some embodiments, the first MAC CE includes: at least one first-type bit, indicating activation or deactivation of the sub-configuration.

In the above embodiment, the first MAC CE carries the at least one first-type bit. On the one hand, reporting of a CSI report of the terminal is activated by utilizing the first MAC CE. On the other hand, activation or deactivation of the sub-configuration is indicated by the at least one first-type bit in the first MAC CE, to realize activation or deactivation based on the sub-configuration.

In combination with some embodiments of the first aspect, in some embodiments, the first MAC CE further includes: at least one second-type bit, indicating activation or deactivation of the CSI report configuration; in which the at least one first-type bit specifically indicates activation or deactivation of a sub-configuration in an activated CSI report configuration.

In the above embodiment, the first MAC CE further includes the at least one second-type bit for indicating activation or deactivation of the CSI report configuration. The at least one first-type bit and the at least one second-type bit may indicate at least one activated CSI report configuration and the activation or deactivation of the sub-configuration in each activated CSI report configuration, such that the terminal may more accurately acquire the CSI report configuration and the specific sub-configuration adopted by the CSI report to be reported, which may reduce the measurement power consumption of the terminal, and save bit overhead.

In combination with some embodiments of the first aspect, in some embodiments, the first MAC CE includes: a third-type bit, in which the third-type bit indicates that the MAC CE is the first MAC CE in a case that the third-type bit is configured with a first bit value.

In the above embodiment, the first MAC CE further carries the third-type bit, and different bit values of the third-type bit are used to indicate the type of the MAC CE, such that, the terminal further obtains the activation or deactivation of the sub-configuration indicated by the first MAC CE after determining that the MAC CE is the first MAC CE based on the bit value of the third-type bit in the received MAC CE.

In combination with some embodiments of the first aspect, in some embodiments, the MAC CE further includes a second MAC CE. A second bit value of the third-type bit indicates that the MAC CE is the second MAC CE, and the second MAC CE indicates activation or deactivation of the CSI report configuration.

In the above embodiment, the network device may further send the second MAC CE to the terminal for indicating the activation or deactivation of the CSI report configuration. The second MAC CE further carries the third-type bit. Different bit values of the third-type bit are used to distinguish the first MAC CE and the second MAC CE, such that the terminal may realize the activate or deactivate of the CSI report configuration at different granularities according to different types of the received MAC CE.

In combination with some embodiments of the first aspect, in some embodiments, the at least one first-type bit is a bitmap, in which one bit in the bitmap indicates activation or deactivation of one sub-configurations; or the at least one first-type bit is joint indication information, in which a sequence value of the at least one first-type bit indicates a combination relationship of activation or deactivation of a plurality of sub-configurations, and the sequence value is determined based on at least one bit value of the at least one first-type bit.

In the above embodiment, the at least one first-type bit may indicate the activation or deactivation of at least one sub-configuration in the CSI report configuration through the bitmap, thus effectively reducing a decoding complexity of the at least one first-type bit in the first MAC CE by utilizing a correspondence between at least one bit in the bitmap and the at least one sub-configuration. Or, the at least one first-type bit may indicate the activation or deactivation of the at least one sub-configuration in the CSI report configuration through the joint indication information, thereby utilizing a smaller number of first-type bits to indicate a combination relationship of activation or deactivation of more sub-configurations, which may effectively reduce the number of bits occupied by the first MAC CE.

In combination with some embodiments of the first aspect, in some embodiments, the at least one first-type bit and the at least one second-type bit are located in different octets of the first MAC CE; a first-type bit carried by one of the octets indicates activation or deactivation of a sub-configuration of one CSI report configuration indicated by one of the at least one second-type bit.

In the above embodiment, the at least one first-type bit and the at least one second-type bit are carried in different octets in the first MAC CE. Respectively. Thus, when decoding the first MAC CE, the terminal may first decode the octet where the at least one second-type bit is located, and then selectively decode the octet carrying the at least one first-type bit according to a decoding result of the at least one second-type bit, to reduce the decoding amount of the terminal and improve a decoding efficiency.

In combination with some embodiments of the first aspect, in some embodiments, bits of the first MAC CE form N octets, where N is a positive integer greater than or equal to 3; a first octet of the first MAC CE at least indicates a serving cell identity and/or a bandwidth part (BWP) identity; the at least one second-type bit is located in a second octet of the first MAC CE; a first-type bit of the at least one first-type bit is located in an n-th octet of the first MAC CE; where n is a positive integer greater than or equal to 3 and less than or equal to N.

In the above embodiment, at least one octet is added on the basis of an existing MAC CE, and the at least one newly added octet is used to carry the at least one first-type bit. Thus, when decoding the first MAC CE, the terminal may determine the activated CSI report configuration according to the octet where the at least one second-type bit is located, and determine the octet associated with the activated CSI report configuration among a plurality of octets carrying first-type bits, to decode the first-type bits of the octets, so as to obtain the activation or deactivation of the sub-configuration in the activated CSI report configuration, reduce the decoding amount of the terminal, and improve the decoding efficiency.

In combination with some embodiments of the first aspect, in some embodiments, identities corresponding to CSI report configurations mapped from a third octet to an N-th octet of the first MAC CE increase progressively; or identities corresponding to CSI report configurations mapped from a third octet to an N-th octet of the first MAC CE decrease progressively.

In the above embodiment, the identities corresponding to the CSI report configurations mapped from the third octet to the N-th octet of the first MAC CE may present a trend of progressively increasing or decreasing, thus improving a format flexibility of the first MAC CE.

In combination with some embodiments of the first aspect, in some embodiments, the first MAC CE includes M octets, where M is a positive integer greater than or equal to 2; a first-type bit of the at least one first-type bit is located in an m-th octet of the first MAC CE, where m is greater than or equal to 2 and less than or equal to M; a first-type bit in one octet indicates activation or deactivation of a sub-configuration in one CSI report configuration.

In the above embodiment, the first MAC CE includes a plurality of octets, and the at least one first-type bit is in a plurality of octets other than the first octet in the first MAC CE. The plurality of octets carrying first-type bits are directly used to, on the one hand, indicate the activation or deactivation of sub-configurations in the CSI report configuration using the first-type bits, and on the other hand, indicate the activation or deactivation of the CSI report configuration corresponding to the octet, without need to carry the second-type bit in the first MAC CE, which reduces the number of bits occupied by the first MAC CE and reduces the signaling overhead.

In combination with some embodiments of the first aspect, in some embodiments, identities corresponding to CSI report configurations mapped from a second octet to an M-th octet of the first MAC CE increase progressively, or identities corresponding to CSI report configurations mapped from a second octet to an M-th octet of the first MAC CE decrease progressively.

In the above embodiment, the identities corresponding to the CSI report configurations mapped from the second octet to the M-th octet of the first MAC CE may present a trend of progressively increasing or decreasing, thus improving a format flexibility of the first MAC CE.

In combination with some embodiments of the first aspect, in some embodiments, one of the at least one second-type bit indicates activation or deactivation of one CSI report configuration; one octet of the first MAC CE includes the at least one first-type bit and one second-type bit; in which a first-type bit adjacent to an n-th second-type bit and located in the same octet as the n-th second-type bit indicates activation or deactivation of a sub-configuration in a CSI report configuration corresponding to the n-th second-type bit.

In the above embodiment, the at least one first-type bit and the second-type bit are simultaneously carried in one octet of the first MAC CE, the first-type bit adjacent to the second-type bit and located in the same octet as the second-type bit indicates activation or deactivation of the sub-configuration in the CSI report configuration corresponding to the second-type bit. Thus, when decoding the first MAC CE, the terminal may determine whether the CSI report configuration corresponding to the second-type bit is activated according to the second-type bit in one octet. In a case where the CSI report configuration corresponding to the second-type bit is activated, the at least one first-type bit adjacent to the second-type bit is decoded to determine the activation or deactivation of the CSI report configuration corresponding to the second-type bit, thus improving the decoding efficiency of the terminal.

In combination with some embodiments of the first aspect, in some embodiments, one octet includes two second-type bits; the two second-type bits in the one octet are spaced apart, and one second-type bit corresponds to X first-type bits, where X is a positive integer greater than or equal to 1

In the above embodiment, one octet in the first MAC CE carries two second-type bits and the two second-type bits are distributed at intervals, the first-type bit adjacent to the second-type bit indicates the activation or deactivation of the sub-configuration in the CSI report configuration indicated by the adjacent second-type bit, thus, on the one hand, effectively improving the decoding efficiency of the terminal, and on the other hand, effectively reducing the number of bits occupied by the first MAC CE in a case of ensuring that the first MAC CE can indicate the activation or deactivation of more sub-configurations in the CSI report configuration.

In combination with some embodiments of the first aspect, in some embodiments, a logical channel identifier (LC ID) of the first MAC CE is different from an LC ID of a second MAC CE, in which the second MAC CE indicate activation or deactivation of the CSI report configuration.

In the above embodiment, the first MAC CE and the second MAC CE are distinguished by the LC ID carried in a header of a MAC PDU where the MAC CE is located or a header of a MAC sub-PDU. On the one hand, it is convenient for the terminal to directly determine the type of the MAC CE according to the LC ID, and on the other hand, it does not need to occupy the bits of the MAC CE.

In combination with some embodiments of the first aspect, in some embodiments, the at least one first-type bit is at least one reserved bit of the first MAC CE.

In the above embodiment, the activation or deactivation of the reporting of the CSI report with a sub-configuration granularity is realized by the at least one reserved bit in the existing MAC CE, which may realize a finer-grained configuration for the CSI report without modifying the format of the existing MAC CE.

In combination with some embodiments of the first aspect, in some embodiments, the first MAC CE includes a first octet and a second octet; in which the third-type bit is a reserved bit of the first octet, and the at least one first-type bit is at least one reserved bit of the second octet.

In the above embodiment, the type of the MAC CE is indicated by the reserved bit in the first octet in the existing MAC CE, and the activation or deactivation of the sub-configuration in the CSI report configuration is indicated by the reserved bit in the second octet in the existing MAC CE, which can not only indicate the type of MAC CE, but also implement a more fine-grained configuration for the CSI report, without modifying the format of the existing MAC CE.

In a second aspect, embodiments of the present disclosure provide a method for processing a CSI report configuration. The method includes: receiving an MAC CE sent by a network device, in which the MAC CE includes a first MAC CE, the first MAC CE carries first information, the first information indicates activation or deactivation of a sub-configuration corresponding to the CSI report configuration.

In the above embodiment, the terminal receives the first MAC CE sent by the network device and uses the first information in the first MAC CE to indicate the activation or deactivation of the sub-configuration of the CSI report configuration, thus realizing the activation or deactivation of a finer-grained CSI report configuration, which may reduce measurement power consumption of the terminal and saving bit overhead.

In a third aspect, embodiments of the present disclosure provide a method for processing a CSI report configuration. The method includes: a network device sending an MAC CE to a terminal, in which the MAC CE includes a first MAC CE, the first MAC CE carries first information, the first information indicates activation or deactivation of a sub-configuration of the CSI report configuration.

In a fourth aspect, embodiments of the present disclosure provide a network device. The network device includes: a sending module, configured to send an MAC CE to a terminal, in which the MAC CE includes a first MAC CE, the first MAC CE carries first information, the first information indicates activation or deactivation of a sub-configuration of a CSI report configuration.

In a fifth aspect, embodiments of the present disclosure provide a terminal. The terminal includes: a receiving module, configured to receive an MAC CE sent by a network device, in which the MAC CE includes a first MAC CE, the first MAC CE carries first information, the first information indicates activation or deactivation of a sub-configuration corresponding to a CSI report configuration.

In a sixth aspect, embodiments of the disclosure provide a communication system. The communication system includes: a terminal and a network device, in which the terminal is configured to implement the method provided in the first aspect, and the network device is configured to implement the method provided in the second aspect.

In a seventh aspect, embodiments of the disclosure provide a communication device. The communication device includes one or more processors. The one or more processors are configured to call instructions to cause the communication device to perform the method provided in the first aspect or the second aspect.

In an eighth aspect, embodiments of the disclosure provide a storage medium. The storage medium stores instructions that, when running on a communication device, cause the communication device to perform the method provided in the first aspect or the second aspect.

In a ninth aspect, embodiments of the disclosure provide a program product that, when executed by a communication device, causes the communication device to implement the method as described in optional implementations of the first aspect or the second aspect.

In a tenth aspect, embodiments of the disclosure provide a computer program that, when running on a computer, causes the computer to implement the method as described in optional implementations of the first aspect or the second aspect.

It may be understood that the network device, the terminal, the communication device, the communication system, the storage medium, the program product, and the computer program are all used to implement the method provided in embodiments of the disclosure. Thus, regarding beneficial effects they may achieve, reference may made be to the beneficial effects in the corresponding methods, which may not be repeated herein.

Embodiments of the disclosure provide a method for processing a CSI report configuration, a communication device, a communication system, and a storage medium. In some embodiments, terms such as "method for processing a CSI report configuration", "information processing method" and "communication method" may be used interchangeably, terms such as "information indication apparatus", "information processing apparatus", and "information transmission apparatus" may be used interchangeably, and terms such as "information processing system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one selected from A and B for execution (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in a case of/that...", "when", "upon...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and the device may be interpreted as physical or virtual, and their names are not limited to the names recorded in embodiments. In some cases, the apparatus and the device may also be understood as "apparatus", "equipment", "device", "circuit", "network element", "node", "function", "unit", "section", "system", "network", "chip", "chip system", "entity", and "subject", etc.

In some embodiments, the term such as "network" may be interpreted as an apparatus (e.g., an access network device, a core network device, etc.) included in the network.

In some embodiments, "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "BWP" and the like.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, an access network device, a core network device, or the network device may be replaced by the terminal. For example, various embodiments of the present disclosure may also be applied to a structure in which communication between the access network device, the core network device, or the network device and the terminal is replaced by the communication between a plurality of terminals (for example, device-to-device (D2D), vehicle-to-everything (V2X), etc.). In this case, it may also be set as a structure in which the terminal has all or part of the functions of the access network device. In addition, terms such as "uplink" and "downlink" may also be replaced by terms corresponding to communication between terminals (for example, "side"). For example, "uplink channel", "downlink channel", etc. may be replaced by "side channel", and "uplink", "downlink", etc. may be replaced by "sidelink".

In some embodiments, the terminal may be replaced by the access network device, the core network device, or the network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

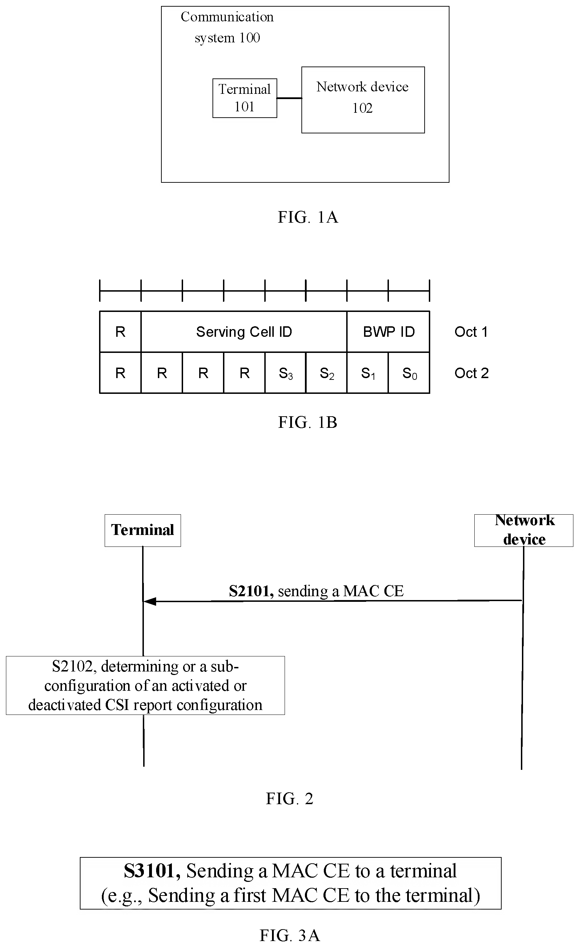

FIG. 1A is a schematic diagram illustrating an architecture of a communication system according to an embodiment of the disclosure.

As shown in FIG. 1A, the communication system 100 may include a terminal 101 and a network device 102. The network device 102 may include an access network device and a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited herein.

In some embodiments, the core network device may be a device including a first network element, etc., or may be a plurality of devices or a group of devices, each including a first network element. The network element may be virtual or physical. The core network may include, for example, at least one of an evolved packet core (EPC), a 5G core network (5GCN), or a next generation core (NGC).

In some embodiments, the first network element is, for example, an access and mobility management function (AMF).

In some embodiments, the first network element is, for example, a mobility management entity (MME).

In some embodiments, the first network element is used for access and mobility management, such as registration management, connection management, and mobility management, etc., but the name is not limited thereto.

In some embodiments, the first network element may be a network element independent of the core network device.

In some embodiments, the core network may further include a second network element, etc. The second network element may include: user data management (UDM), etc.

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects other than those shown in FIG. 1A. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-wideband (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, for activating or deactivating a MAC CE for SP CSI reporting, as shown in FIG. 1B, FIG. 1B is a schematic diagram of a structure of a MAC CE according to an example embodiment.

A serving cell identity (ID)indicates an identity of a serving cell for which the MAC CE applies. A length of the field is 5 bits.

A bandwidth part (BWP) ID indicates an uplink (UL) BWP for which the MAC CE applies as a codepoint of a downlink control information (DCI) bandwidth part indicator field as specified in TS 38.212 [9]. A length of the BWP ID field is 2 bits.

Si indicates an activation/deactivation status of a semi-persistent CSI report configuration in a CSI report configuration (csi-ReportConfigToAddModList), as specified in TS 38.331 [5].

S0 refers to a CSI report configuration which includes PUCCH resources for SP CSI reporting in an indicated BWP and has a lowest CSI configuration identify (CSI-ReportConfigId) within a list with a type set to semiPersistentOnPUCCH,

S1 refers to a report configuration which includes PUCCH resources for SP CSI reporting in the indicated BWP and has a second lowest CSI-ReportConfigId, and so on.

If the number of report configurations within the list with a type set to semiPersistentOnPUCCH in the indicated BWP is less than i + 1, a MAC entity shall ignore a Si field.

The Si field is set to 1 to indicate that the corresponding semi-persistent CSI report configuration shall be activated. The Si field is set to 0 to indicate that the corresponding semi-persistent CSI report configuration shall be deactivated.

FIG. 2 is a schematic diagram illustrating an interaction of a method for processing a CSI report configuration according to an embodiment of the disclosure. As shown in FIG. 2, an embodiment of the present disclosure relates to a method for processing a CSI report configuration, configured in a communication system 100, and the method includes step S2101 and step S2102.

As step S2101, a network device sends a MAC CE to a terminal.

In some embodiments, the terminal receives the MAC CE sent by the network device.

In some embodiments, the network device may include, but is not limited to, an access network device.

In some embodiments, the terminal may be various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the MAC CE is used to activate or deactivate reporting of a semi-persistent channel state information (SP-CSI) report.

In some embodiments, the MAC CE is used to activate or deactivate reporting of the SP-CSI report at different configuration granularities.

In some embodiments, the MAC CE may include one of:
a first MAC CE; or
a second MAC CE.

In some embodiments, the first MAC CE is used to activate or deactivate reporting of the CSI report at a granularity of sub-configuration.

In some embodiments, the second MAC CE is used to activate or deactivate reporting of the CSI report at a granularity of CSI report configuration.

In some embodiments, a sub-configuration of a CSI report configuration corresponds to a spatial pattern (SD) element and/or transmitting power consumption.

It should be noted that each CSI report configuration may include a plurality of sub-configurations. Each sub-configuration may be associated with a spatial pattern (spatial pattern, SD) and/or a plurality of power consumption (power) modes.

The first MAC CE may activate the reporting of the CSI report at the granularity of sub-configuration, that is, the first MAC CE may activate a part of sub-configurations in the CSI report configuration, and deactivate another part of the sub-configurations in the CSI report configuration. The second MAC CE may activate reporting of the CSI report at the granularity of CSI report configuration, that is, the second MAC CE may activate or deactivate only the entire CSI report configuration (all of the sub-configurations in the CSI report configuration). The two different types of MAC CEs have different configuration granularities for activating or deactivating the CSI report.

In order to facilitate the terminal to determine whether the received MAC CE is the first MAC CE or the second MAC CE, in some embodiments, the MAC CE includes: a third-type bit.

In some embodiments, a first bit value of the third-type bit indicates that the MAC CE is the first MAC CE.

In some embodiments, a second bit value of the third-type bit indicates that the MAC CE is the second MAC CE.

It should be noted that the first MAC CE and the second MAC CE may be distinguished by different bit values of the third-type bit.

In some embodiments, the third-type bit may be a reserved bit in the MAC CE.

It is worth noting that the reserved bit in the MAC CE may be directly used to distinguish the first MAC CE from the second MAC CE through different bit values of the reserved bit. In this embodiment, the third-type bit may be carried in the MAC CE as a body content of the MAC CE.

In some other embodiments, the first MAC CE and the second MAC CE may be distinguished based on a logical channel identifier (LC ID) of the MAC CE.

In some embodiments, an LC ID of the first MAC CE is different from an LC ID of the second MAC CE.

It should be noted that a header of a MAC protocol data unit (PDU) where the MAC CE is located or a header of a MAC sub-PDU may include an LC ID field, and an LC ID carried in an LC ID field may be used to indicate whether the MAC CE is the first MAC CE or the second MAC CE.

In some embodiments, the first MAC CE and the second MAC CE may be indicated respectively based on two different reserved codepoints in the LC ID field.

It should be noted that the LC ID field may include a plurality of bits. Illustratively, the LC ID field may include 8 bits, and the 8 bits may have 64 codepoints. For example, 37-42 and 47 codepoints among the 64 codepoints are reserved codepoints. In embodiments of the present disclosure, these reserved codepoints may be used to indicate the first MAC CE and the second MAC CE.

In some embodiments, the first MAC CE may include: at least one first-type bit, indicating activation or deactivation of the sub-configuration.

In some embodiments, the at least one first-type bit is a bitmap, one bit in the bitmap indicates activation or deactivation of one sub-configurations.

It should be noted that at least one first-type bit may indicate the activation or deactivation of at least one sub-configuration in the CSI report configuration by means of the bitmap. Each bit in the bitmap corresponds to one sub-configuration, and different bits carry specific bit values to indicate the activation or deactivation of the sub-configurations corresponding to the bits.

It is worth noting that a method of indicating the activation or deactivation of the sub-configuration based on the bitmap may effectively reduce a decoding complexity of the at least one first-type bit in the first MAC CE. However, since one bit in the bitmap corresponds to one sub-configuration, the at least one first-type bit in the first MAC CE may indicate the number of activated or deactivated sub-configurations which is limited by the number of first-type bits in the first MAC CE.

For example, the first MAC CE includes 4 first-type bits, and the first MAC CE may only indicate activation or deactivation of 4 sub-configurations.

In some embodiments, the at least one first-type bit is joint indication information, in which one sequence value of the at least one first-type bit indicates a combination relationship of activation or deactivation of a plurality of sub-configurations, and the one sequence value is determined based on at least one bit value of the at least one first-type bit.

It should be noted that the at least one first-type bit in the first MAC CE forms an indication sequence. Different sequence values of the indication sequence are used to indicate different combination relationships of activation or deactivation of the plurality of sub-configurations in the CSI report configuration.

In some embodiments, a mapping relationship between different sequence values of the at least one first-type bit and different combination relationships of activation or deactivation of the plurality of sub-configurations in the CSI report configuration may be pre-configured. Thus, the one sequence value formed by the at least one first-type bit is used to indicate the combination relationship of activation or deactivation of the plurality of sub-configurations in the CSI report configuration.

It is worth noting that the method for indicating the activation or deactivation of the sub-configuration based on the joint indication information may effectively increase the number of different situations of activation or deactivation of the plurality of sub-configurations that can be indicated by the at least one first-type bit. By using a smaller number of first-type bits to indicate the combination relationship of activation or deactivation of more sub-configurations, which may effectively reduce the number of bits occupied by the first MAC CE.

For example, the first MAC CE includes 4 first-type bits, and the 4 first-type bits form an indication sequence with 16 different sequence values. Thus, different sequence values of the indication sequence are used to indicate different combination relationships of activation or deactivation of all of the sub-configurations in the CSI report configuration.

In some embodiments, the first MAC CE further includes: at least one second-type bit, indicating activation or deactivation of the CSI report configuration. The first-type bit is used to indicate activation or deactivation of a sub-configuration in an activated CSI report configuration.

It should be noted that different bit values of the second-type bit may indicate the activation or deactivation of the CSI report configuration corresponding to the second-type bit. Further, different bit values of the first-type bit may indicate the activation or deactivation of the sub-configuration corresponding to the first-type bit in the activated CSI report configuration.

In some embodiments, the second-type bit may be S bits in an existing MAC CE.

It should be noted that the S bits in the existing MAC CE may be 4 bits, namely S0 to S3. It may be noted that S0 to S3 correspond to different CSI report configurations respectively.

The first MAC CE may have a plurality of different optional structures, and several optional embodiments are provided below.

### Optional embodiment one:

In some embodiments, the first MAC CE includes a first octet and a second octet. The third-type bit is a reserved bit of the first octet, and the at least one first-type bit is at least one reserved bit of the second octet.

It should be noted that the first MAC CE as shown in the above embodiment may directly use the reserved bit in the existing MAC CE. Specifically, the reserved bit in the first octet is used to carry the third-type bit. The at least one reserved bit in the second octet is used to carry the at least one first-type bit. In this way, the reserved bit in the second octet in the existing MAC CE may be directly used, without modifying the structure of the existing MAC CE, to realize the activation or deactivation of the reporting of the CSI report at the granularity of sub-configuration.

In some embodiments, the second octet further includes: at least one second-type bit.

In some embodiments, the at least one second-type bit indicates activation or deactivation of the CSI report configuration.

The at least one first-type bit in the second octet indicates activation or deactivation of the sub-configuration in an activated CSI report configuration indicated by the at least one second-type bit.

In some embodiments, the first octet further indicates a serving cell identity (ID) and/or a bandwidth part (BWP) identity (ID).

In some embodiments, the first octet further includes at least one of:
a first information field carries the serving cell ID; or
a second information field carries the BWP ID.

It should be noted that the serving cell ID indicates an identity of the serving cell to which the first MAC CE applies, and a length of the first information field may be 5 bits. The BWP ID indicates an identity of an uplink BWP to which the first MAC CE applies. A length of the second information field may be 2 bits.

In some embodiments, the first octet of the first MAC CE may carry one third-type bit; the second octet may carry four second-type bits and four first-type bits.

It is worth noting that when a bit value of the third-type bit is 1, it indicates that the MAC CE is the first MAC CE. When a bit value of the third-type bit is 0, it indicates that the MAC CE is the second MAC CE.

In some embodiments, the four first-type bits in the second octet indicate at least one of:
activation or deactivation of sub-configurations in all of activated CSI report configurations indicated by the 4 four second-type bits in the second octet; or
activation or deactivation of a sub-configuration in a reference CSI report configuration.

It should be noted that the reference CSI report configuration may be determined based on a predefined manner. For example, the reference CSI report configuration may be a CSI report configuration corresponding to a minimum CSI configuration identify in a CSI report configuration set.

In some embodiments, a size of the first MAC CE is 16 bits.

### Optional embodiment two:

In some embodiments, the at least one first-type bit is at least one reserved bit of the first MAC CE.

It should be noted that an embodiment of the present disclosure directly uses the at least one reserved bit in the existing MAC CE to carry the at least one first-type bit to indicate the activation or deactivation of the sub-configuration. In this way, the activation or deactivation of the reporting of the CSI report at the granularity of sub-configuration may be achieved without modifying the structure of the existing MAC CE.

In some embodiments, the first MAC CE includes: a first octet and a second octet. The at least one first-type bit is a reserved bit in the first octet and the second octet.

It is worth noting that the reserved bit in the first MAC CE in this embodiment is used to carry the first-type bit. That is, the first MAC CE does not include the third-type bit.

In order to distinguish the first MAC CE from the second MAC CE, in some embodiments, a header of a MAC PDU or a header of a MAC sub-PDU where the first MAC CE is located may include: an LC ID field. The LC ID field carries an LC ID corresponding to the first MAC CE.

In some other embodiments, the first MAC CE and the second MAC CE may be distinguished according to a bit value of the reserved bit in the MAC CE.

It should be noted that, whether reserved bits of the MAC CE are used to carry the first-type bits may be determined based on whether the bit values of all of the reserved bits of the MAC CE are preset bit values, and then whether the MAC CE is the first MAC CE may be determined.

For example, if the bit values of all of the reserved bits in the MAC CE are 0, it indicates that the MAC CE is the second MAC CE.

In some embodiments, the second octet further includes: at least one second-type bit.

In some embodiments, at least one second-type bit indicates an activated or deactivated CSI report configuration. The at least one first-type bit in the second octet indicates activation or deactivation of a sub-configuration in an activated CSI report configuration indicated by the second-type bit.

In some embodiments, the first octet is further used to indicate a serving cell identity and/or a BWP identity.

In some embodiments, the first octet further includes at least one of:
a first information field carries the serving cell ID; or
a second information field carries the BWP ID.

It should be noted that the serving cell ID indicates an identity of the serving cell to which the first MAC CE applies, and a length of the first information field may be 5 bits. The BWP ID indicates an identity of an uplink BWP to which the first MAC CE applies. A length of the second information field may be 2 bits.

In some embodiments, the first octet of the first MAC CE may carry one first-type bit; the second octet may carry four second-type bits and four first-type bits.

In some embodiments, the four first-type bits in the second octet indicate at least one of:
activation or deactivation of sub-configurations in all of activated CSI report configurations indicated by the 4 four second-type bits in the second octet; or
activation or deactivation of a sub-configuration in a reference CSI report configuration.

It should be noted that the reference CSI report configuration may be determined based on a predefined manner. For example, the reference CSI report configuration may be a CSI report configuration corresponding to a minimum CSI configuration identify in a CSI report configuration set.

In some embodiments, a size of the first MAC CE is 16 bits.

### Optional embodiment three:

In some embodiments, the at least one first-type bit and the at least one second-type bit are located in different octets of the first MAC CE. A first-type bit carried by one of the octets indicates activation or deactivation of a sub-configuration of one CSI report configuration indicated by one of the at least one second-type bit

It should be noted that, the first MAC CE in this embodiment adds at least one octet for carrying at least one first-type bit on the basis of the existing MAC CE. The first-type bit carried by one octet corresponds to one CSI report configuration indicated by one second-type bit, to indicate the activation or deactivation of the sub-configuration within the corresponding CSI report configuration.

In some embodiments, bits of the first MAC CE form N octets, where N is a positive integer greater than or equal to 3;
a first octet of the first MAC CE at least indicates a serving cell identity and/or a bandwidth part (BWP) identity;
the at least one second-type bit is in a second octet of the first MAC CE; and
a first-type bit of the at least one first-type bit is in an n-th octet of the first MAC CE; where n is a positive integer greater than or equal to 3 and less than or equal to N.

It is worth noting that the first MAC CE in the present disclosure retains the structure of the existing MAC CE, that is, the first octet and the second octet in the existing MAC CE are retained. The activation or deactivation of the sub-configuration in one CSI report configuration indicated by one second-type bit is indicated through the newly added first-type bit in each octet.

In some embodiments, identities corresponding to CSI report configurations mapped from a third octet to an N-th octet of the first MAC CE increase progressively.

It may be understood that a first-type bit in the third octet is used to activate or deactivate a plurality of sub-configurations in a CSI report configuration indicated by the second-type bit corresponding to a minimum CSI configuration identify. A first-type bit in the N-th octet is used to activate or deactivate a plurality of sub-configurations in a CSI report configuration indicated by the second-type bit corresponding to a maximum CSI configuration identify.

In some other embodiments, identities corresponding to CSI report configurations mapped from a third octet to an N-th octet of the first MAC CE decrease progressively.

It may be understood that a first-type bit in the third octet is used to activate or deactivate a plurality of sub-configurations in a CSI report configuration indicated by the second-type bit corresponding to the maximum CSI configuration identify. A first-type bit in the N-th octet is used to activate or deactivate a plurality of sub-configurations in a CSI report configuration indicated by the second-type bit corresponding to the minimum CSI configuration identify.

In some embodiments, a first-type bit in one octet corresponds to a plurality of sub-configurations in one activated CSI report configuration indicated by the second-type bit; or
a first-type bit in one octet corresponds to a plurality of sub-configurations in one CSI report configuration in a CSI report configuration set.

It is worth noting that the number of newly added octets in the first MAC CE may be determined according to the number of activated CSI report configurations indicated by the at least one second-type bit in the second octet. It may be understood that for each activated CSI report configuration, there is a corresponding octet carrying the first-type bit. The first-type bits in one octet indicates the activation or deactivation of the sub-configuration in the corresponding activated CSI report configuration.

Or, the number of newly added octets in the first MAC CE may be determined according to the number of CSI report configurations included in the CSI report configuration set. It is understandable that, for each CSI report configuration in the CSI report configuration set, there is one corresponding octet carrying the first-type bit. That is, a deactivated CSI report configuration also corresponds to one octet carrying the first-type bit. The first-type bit in one octet indicates the activation or deactivation of the sub-configuration in the corresponding CSI report configuration.

In some embodiments, the first octet further includes at least one of:
a first information field carries the serving cell ID; or
a second information field carries the BWP ID.

It should be noted that the serving cell ID indicates an identity of the serving cell to which the first MAC CE applies, and a length of the first information field may be 5 bits. The BWP ID indicates an identity of an uplink BWP to which the first MAC CE applies. A length of the second information field may be 2 bits.

In some embodiments, the first MAC CE may be a MAC CE with a variable size.

In some embodiments, a size of the first MAC CE is N*8 bits.

It may be noted that the size of the first MAC CE in this embodiment may be determined by the number of octets included in the first MAC CE.

### Optional embodiment four:

In some embodiments, the first MAC CE includes M octets, where M is a positive integer greater than or equal to 2.

A first-type bit of the at least one first-type bit is in an m-th octet of the first MAC CE, where m is greater than or equal to 2 and less than or equal to M.

A first-type bit in one octet indicates activation or deactivation of a sub-configuration in one CSI report configuration.

It should be noted that, compared with the first MAC CE shown in optional embodiment three, the first MAC CE of this embodiment of the present disclosure does not include an octet carrying the second-type bit. That is, the first MAC CE in this embodiment of the present disclosure does not carry the second- type bit.

In some embodiments, identities corresponding to CSI report configurations mapped from a second octet to an M-th octet of the first MAC CE increase progressively.

It may be noted that the first-type bit in the second octet is used to activate or deactivate a plurality of sub-configurations in a CSI report configuration corresponding to a minimum CSI configuration identify in a CSI report configuration set. The first-type bit in the M-th octet is used to activate or deactivate a plurality of sub-configurations in a CSI report configuration corresponding to a maximum CSI configuration identify in the CSI report configuration set.

In some embodiments, identities corresponding to CSI report configurations mapped from a second octet to an M-th octet of the first MAC CE decrease progressively.

It may be noted that the first-type bit in the second octet is used to activate or deactivate a plurality of sub-configurations in a CSI report configuration corresponding to the maximum CSI configuration identify in a CSI report configuration set. The first-type bit in the M-th octet is used to activate or deactivate a plurality of sub-configurations in a CSI report configuration corresponding to the minimum CSI configuration identify in the CSI report configuration set.

In some embodiments, the first octet in the first MAC CE may at least indicate a serving cell identify and/or a BWP identify.

In some embodiments, the first octet further includes at least one of:
a first information field carries the serving cell ID; or
a second information field carries the BWP ID.

It should be noted that the serving cell ID indicates an identity of the serving cell to which the first MAC CE applies, and a length of the first information field may be 5 bits. The BWP ID indicates an identity of an uplink BWP to which the first MAC CE applies. A length of the second information field may be 2 bits.

In some embodiments, the third-type bit is a reserved bit of the first octet.

It may be noted that the first MAC CE and the second MAC CE are distinguished by directly using different bit values of the third-type bit.

In some embodiments, the first MAC CE may be a MAC CE with a variable size.

In some embodiments, a size of the first MAC CE is M*8 bits.

It may be noted that the size of the first MAC CE in this embodiment may be determined by the number of octets included in the first MAC CE.

In some embodiments, such a first MAC CE may not include the second-type bit.

### Optional embodiment five:

In some embodiments, one of the at least one second-type bit indicates activation or deactivation of one CSI report configuration.

One octet of the first MAC CE includes the at least one first-type bit and one second-type bit.

A first-type bit adjacent to an n-th second-type bit and located in the same octet as the n-th second-type bit indicates activation or deactivation of a sub-configuration in a CSI report configuration corresponding to the n-th second-type bit.

It should be noted that the first MAC CE shown in this embodiment of the present disclosure may carry the first-type bit and the second-type bit in the same octet, and the first-type bit adjacent to the second-type bit in the same octet is used to indicate the activation or deactivation of the sub-configuration in the activated CSI report configuration indicated by the second-type bit.

In some embodiments, one octet includes two second-type bits.

The two second-type bits in the one octet are spaced apart, and one second-type bit corresponds to X first-type bits, where X is a positive integer greater than or equal to 1 and less than or equal to 3.

It may be understood that the two second-type bits in the one octet indicate the activation or deactivation of different CSI report configurations respectively. The first-type bit adjacent to one second-type bit and located in the same octet as the second-type bit indicates the activation or deactivation of the sub-configuration in one activated CSI report configuration indicated by the adjacent second-type bit, and the first-type bit adjacent to another second-type bit and located in the same octet as another second-type bit indicates the activation or deactivation of the sub-configuration in one activated CSI report configuration indicated by the adjacent second-type bit.

In some embodiments, one octet includes two second-type bits.

The two second-type bits in the one octet are spaced apart, and one second-type bit corresponds to three first-type bits.

In some embodiments, the first octet in the first MAC CE may at least indicate a serving cell identify and/or a BWP identify.

In some embodiments, the first octet further includes at least one of:
a first information field carries the serving cell ID; or
a second information field carries the BWP ID.

It should be noted that the serving cell ID indicates an identity of the serving cell to which the first MAC CE applies, and a length of the first information field may be 5 bits. The BWP ID indicates an identity of an uplink BWP to which the first MAC CE applies. A length of the second information field may be 2 bits.

In some embodiments, the third-type bit is a reserved bit of the first octet.

It may be noted that the first MAC CE and the second MAC CE are distinguished by directly using different bit values of the third-type bit.

In some embodiments, the first MAC CE may be a MAC CE with a variable size.

In some embodiments, a size of the first MAC CE is M*8 bits.

It may be noted that the size of the first MAC CE in this embodiment may be determined by the number of octets included in the first MAC CE.

In some embodiments, the network device may determine a format of the first MAC CE sent to the terminal based on a protocol agreement.

In some embodiments, the network device may send second information to the terminal, in which the second information indicates the format of the first MAC CE.

It may be noted that the network device may determine the format of the first MAC CE sent to the terminal by itself, and inform the terminal through the second information so that the terminal may decode first MAC CE.

In some embodiments, the terminal may send third information to the network device, in which the third information indicates the format of the first MAC CE.

It may be noted that the terminal may send the third information to the network device to inform the network device of the format of the first MAC CE that the terminal expects to use. The network device may determine the format of the first MAC CE based on the third information.

It is worth noting that the format of the first MAC CE finally determined by the network device may be the same as or different from the format of the first MAC CE that the terminal expects to use. In order to achieve information alignment, the network device may send the second information to the terminal after determining the format of the first MAC CE.

Step S2102: The terminal determines activation or deactivation of a sub-configuration of the CSI report configuration.

In some embodiments, the terminal determines activation or deactivation of the sub-configuration in the CSI report configuration based on a received MAC CE.

In some embodiments, the terminal determines activation or deactivation of the sub-configuration in the CSI report configuration according to a received first MAC CE.

In some embodiments, the terminal may determine whether the received MAC CE is the first MAC CE based on the third-type bits in the MAC CE.

It may be noted that since different bit values of the third-type bit may be used to distinguish the first MAC CE and the second MAC CE, the terminal may decode the received MAC CE and determine whether the received MAC CE is the first MAC CE or the second MAC CE based on a bit value of the third-type bit carried in the MAC CE.

In some embodiments, the terminal may determine whether the received MAC CE is the first MAC CE based on an LC ID carried in a header of a MAC PDU where the MAC CE is located or a header of a MAC sub-PDU.

It should be noted that, since an LC ID of the first MAC CE is different from an LC ID of the second MAC CE, the terminal may obtain the LC ID carried in the header of the MAC PDU where the MAC CE is located or the header of the MAC sub-PDU, and determine whether the received MAC CE is the first MAC CE.

In some embodiments, the terminal may determine activation or deactivation of the sub-configuration of the CSI report configuration based on the at least one first-type bit in the first MAC CE.

In some embodiments, an identifier of an activated sub-configuration indicated by the first-type bit exceeds an identifier range of sub-configuration included in the CSI report configuration, and the terminal may ignore the first-type bit.

In some embodiments, the terminal may determine the activated or deactivated CSI report configuration based on the at least one second type bit in the first MAC CE, and determine the activation or deactivation of the sub-configuration in the activated CSI report configuration based on the at least one first type bit.

In some embodiments, the terminal determines the format of the received first MAC CE.

It should be noted that the first MAC CE may have different optional formats, and decoding information of the first MAC CE in different formats may indicate different contents. Therefore, the terminal needs to first determine the format of the received first MAC CE.

In some embodiments, the terminal may determine the format of the first MAC CE according to a protocol agreement.

In some embodiments, the terminal may determine the format of the first MAC CE according to the second information sent by the network device.

For a first optional format of the first MAC CE:
In some embodiments, the terminal may determine whether the MAC CE is the first MAC CE based on a reserved bit in the first octet of the MAC CE.

In some embodiments, the terminal may determine activation or deactivation of the sub-configuration in the CSI report configuration based on the reserved bit of the second octet in the first MAC CE.

In some embodiments, the terminal may determine the activated CSI report configuration based on the second-type bit of the second octet in the first MAC CE, and determine the activation or deactivation of the sub-configuration in the activated CSI report configuration based on the reserved bit of the second octet in the first MAC CE.

It should be noted that, the first MAC CE in the first optional format may indicate to the terminal the activation or deactivation of the sub-configuration in the activated CSI report configuration without changing the existing format of the MAC CE.

For a second optional format of the first MAC CE:
In some embodiments, the terminal may determine whether the MAC CE is the first MAC CE based on the LC ID carried in the header of the MAC PDU where the MAC CE is located or the header of the MAC sub-PDU.

In some embodiments, the terminal may determine activation or deactivation of the sub-configuration in the CSI report configuration based on all of reserved bits in the first MAC CE.

In some embodiments, the terminal may determine the activated CSI report configuration based on the second-type bit of the second octet in the first MAC CE, and determine the activation or deactivation of the sub-configuration in the activated CSI report configuration based on all of the reserved bits in the first MAC CE.

It should be noted that the first MAC CE in the second optional format may indicate to the terminal the activation or deactivation of the sub-configuration in the activated CSI report configuration without changing the existing format of the MAC CE.

For a third optional format of the first MAC CE:
In some embodiments, the terminal may determine whether the MAC CE is the first MAC CE based on a reserved bit in a first octet of the MAC CE.

In some embodiments, the terminal may determine an identifier corresponding to an activated CSI report configuration based on the second-type bit of the second octet in the first MAC CE, and determine the corresponding octet based on the identifier corresponding to the activated CSI report configuration, and determine the activation or deactivation of the sub-configuration in the activated CSI report configuration based on the first-type bit in the corresponding octet.

It should be noted that the first MAC CE in the third optional format can not only indicate to the terminal the activation or deactivation of the sub-configuration in the activated CSI report configuration, but also reduce the decoding amount of the terminal.

For s fourth optional format of the first MAC CE:
In some embodiments, the terminal may determine whether the MAC CE is the first MAC CE based on a reserved bit in the first octet of the MAC CE.

In some embodiments, the terminal may determine activation or deactivation of a sub-configuration in a CSI report configuration corresponding to the m-th octet based on the first-type bit in the m-th octet in the first MAC CE.

It should be noted that the first MAC CE in the fourth optional format, without carrying the second-type bit, may be able to indicate to the terminal the activated CSI report configuration and the activation or deactivation of the sub-configuration in the activated CSI report configuration.

For a fifth optional format of the first MAC CE:
In some embodiments, the terminal may determine whether the MAC CE is the first MAC CE based on a reserved bit in a first octet of the MAC CE.

In some embodiments, the terminal may determine the activated CSI report configuration based on the second-type bit in one octet, and determine the activation or deactivation of the sub-configuration in the activated CSI report configuration based on the first-type bit adjacent to the second-type bit indicating the activated CSI report configuration in the same octet.

It should be noted that the first MAC CE in the fifth optional format may not only indicate to the terminal the activation or deactivation of the sub-configuration in the activated CSI report configuration, but also reduce the decoding amount of the terminal.

In some embodiments, the terminal may perform a corresponding measurement based on an activated sub-configuration in the CSI report configuration.

It should be noted that the sub-configuration of the CSI report configuration corresponds to a spatial pattern (SD) element and/or the transmitting power consumption. Compared with a manner by which the terminal performs the measurement based on the CSI report configuration, in embodiments of the present disclosure, the terminal only performs the measurement related to the partially activated sub-configuration in the CSI report configuration, which may effectively reduce the measurement power consumption of the terminal.

Furthermore, a measurement result obtained by the terminal based on the measurement related to the partially activated sub-configuration in the CSI report configuration may be reduced accordingly, thus reducing resources required for reporting of the CSI report.

In some embodiments, the terminal may receive a second MAC CE sent by the network device.

In some embodiments, the terminal determines to activate or deactivate the CSI configuration report based on the second MAC CE.

The method for processing a CSI report configuration involved in embodiments of the present disclosure may include at least one of step S2101 to step S2102. For example, step S2101 may be implemented as an independent embodiment. For example, step S2103 may be implemented as an independent embodiment, but is not limited thereto.

In some embodiments, step S2102 is optional, and one or more of these steps may be omitted or replaced in different embodiments. It is noted that, when the network device sends the second MAC CE, since the second MAC CE can only indicate the activation of the CSI report configuration, the terminal does not need to activate or deactivate the sub-configuration in the CSI report configuration.

FIG. 3A is a flow chart of a method for processing a CSI report configuration according to an embodiment. As shown in FIG. 3A, an embodiment of the present disclosure relates to method for processing a CSI report configuration, and is performed by a network device. The method includes step S3101.

Step S3101, a MAC CE is sent to a terminal.

In some embodiments, for optional implementations of step S3101, reference may be made to optional implementations of step S2101 in FIG. 2 and other related parts of embodiments involved in FIG. 2, which is not be repeated here.

In some embodiments, step S3101 is optional, and one or more of these steps may be omitted or replaced in different embodiments. It is noted that the terminal may determine a configuration of a CSI report to be sent according to a protocol, and the network device does not need to send the MAC CE to the terminal.

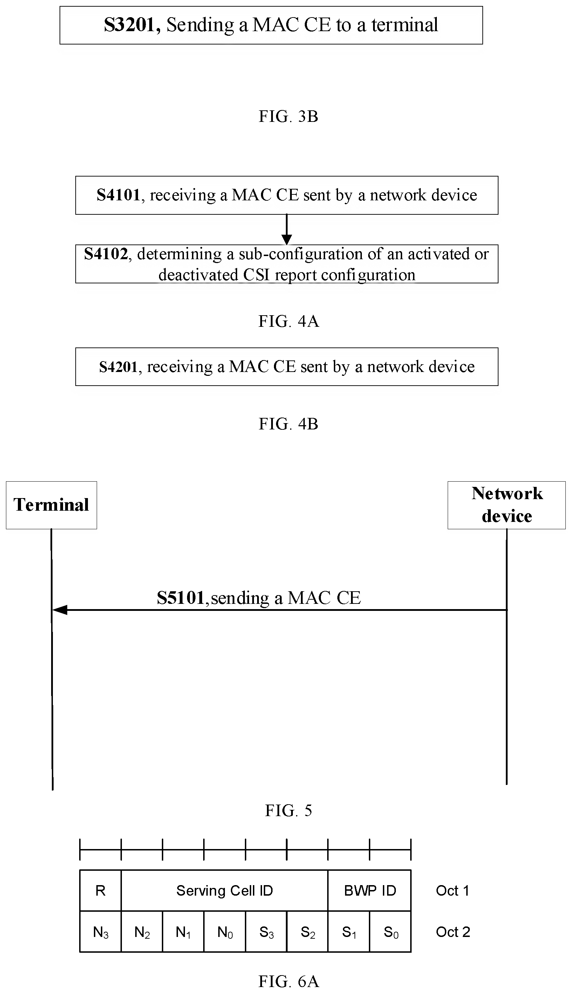

FIG. 3B is a flow chart of a method for processing a CSI report configuration according to an embodiment. As shown in FIG. 3B, an embodiment of the present disclosure relates to method for processing a CSI report configuration, and is performed by a network device. The method includes step S3201.

Step S3201, a MAC CE is sent to a terminal.

In some embodiments, the MAC CE includes a first MAC CE, the first MAC CE carries first information.

In some embodiments, the first information indicates activation or deactivation of a sub-configuration of the CSI report configuration.

In some embodiments, the first MAC CE includes: at least one first-type bit, indicating activation or deactivation of the sub-configuration.

In some embodiments, the first MAC CE further includes: at least one second-type bit, indicating activation or deactivation of the CSI report configuration; in which the at least one first-type bit specifically indicates activation or deactivation of a sub-configuration in an activated CSI report configuration.

In some embodiments, the first MAC CE includes: a third-type bit, in which the third-type bit indicates that the MAC CE is the first MAC CE in a case that the third-type bit is configured with a first bit value.

In some embodiments, the MAC CE further includes a second MAC CE. A second bit value of the third-type bit indicates that the MAC CE is the second MAC CE, and the second MAC CE indicates activation or deactivation of the CSI report configuration.

In some embodiments, the MAC CE further includes a second MAC CE. A second bit value of the third-type bit indicates that the MAC CE is the second MAC CE, and the second MAC CE indicates activation or deactivation of the CSI report configuration.

In some embodiments, the at least one first-type bit and the at least one second-type bit are located in different octets of the first MAC CE; a first-type bit carried by one of the octets indicates activation or deactivation of a sub-configuration of one CSI report configuration indicated by one of the at least one second-type bit.

In some embodiments, bits of the first MAC CE form N octets, where N is a positive integer greater than or equal to 3; a first octet of the first MAC CE at least indicates a serving cell identity and/or a bandwidth part (BWP) identity; the at least one second-type bit is located in a second octet of the first MAC CE; a first-type bit of the at least one first-type bit is located in an n-th octet of the first MAC CE; where n is a positive integer greater than or equal to 3 and less than or equal to N.

In some embodiments, identities corresponding to CSI report configurations mapped from a third octet to an N-th octet of the first MAC CE increase progressively; or identities corresponding to CSI report configurations mapped from a third octet to an N-th octet of the first MAC CE decrease progressively.

In some embodiments, the first MAC CE includes M octets, where M is a positive integer greater than or equal to 2; a first-type bit of the at least one first-type bit is located in an m-th octet of the first MAC CE, where m is greater than or equal to 2 and less than or equal to M; a first-type bit in one octet indicates activation or deactivation of a sub-configuration in one CSI report configuration.

In some embodiments, identities corresponding to CSI report configurations mapped from a second octet to an M-th octet of the first MAC CE increase progressively, or identities corresponding to CSI report configurations mapped from a second octet to an M-th octet of the first MAC CE decrease progressively.

In some embodiments, one of the at least one second-type bit indicates activation or deactivation of one CSI report configuration; one octet of the first MAC CE includes the at least one first-type bit and one second-type bit; in which a first-type bit adjacent to an n-th second-type bit and located in the same octet as the n-th second-type bit indicates activation or deactivation of a sub-configuration in a CSI report configuration corresponding to the n-th second-type bit.

In some embodiments, one octet includes two second-type bits; the two second-type bits in the one octet are spaced apart, and one second-type bit corresponds to X first-type bits, where X is a positive integer greater than or equal to 1.

In some embodiments, an LC ID of the first MAC CE is different from an LC ID of a second MAC CE, in which the second MAC CE indicate activation or deactivation of the CSI report configuration.

In some embodiments, the at least one first-type bit is at least one reserved bit of the first MAC CE.

In some embodiments, the first MAC CE includes a first octet and a second octet; in which the third-type bit is a reserved bit of the first octet, and the at least one first-type bit is at least one reserved bit of the second octet.

FIG. 4A is a flow chart of a method for processing a CSI report configuration according to an embodiment. As shown in FIG. 4A, an embodiment of the present disclosure relates to method for processing a CSI report configuration, and is performed by a terminal. The method includes step S4101 and step S4102.

Step S4101, a MAC CE sent by a network device is received.

In some embodiments, for optional implementations of step S4101, reference may be made to optional implementations of step S2101 in FIG. 2 and other related parts of embodiments involved in FIG. 2, which is not be repeated here.

Step S4102, a sub-configuration of an activated or deactivated CSI report configuration is determined.

In some embodiments, for optional implementations of step S4102, reference may be made to optional implementations of step S2102 in FIG. 2 and other related parts of embodiments involved in FIG. 2, which is not be repeated here.

The method for processing a CSI report configuration involved in embodiments of the present disclosure may include at least one of step S4101 to step S4102. For example, step S4101 may be implemented as an independent embodiment., but is not limited thereto.

In some embodiments, step S4102 is optional, and one or more of these steps may be omitted or replaced in different embodiments. It is noted that, when the network device sends a second MAC CE, since the second MAC CE can only indicate the activation of the CSI report configuration, the terminal does not need to activate or deactivate the sub-configuration in the CSI report configuration.

FIG. 4B is a flow chart of a method for processing a CSI report configuration according to an embodiment. As shown in FIG. 4B, an embodiment of the present disclosure relates to method for processing a CSI report configuration, and is performed by a terminal. The method includes step S4201.

Step S4201, a MAC CE sent by a network device is received.

In some embodiments, the MAC CE includes a first MAC CE, the first MAC CE carries first information.

In some embodiments, the first information indicates activation or deactivation of a sub-configuration of the CSI report configuration.

In some embodiments, the first MAC CE includes: at least one first-type bit, indicating activation or deactivation of the sub-configuration.

In some embodiments, the first MAC CE further includes: at least one second-type bit, indicating activation or deactivation of the CSI report configuration; in which the at least one first-type bit specifically indicates activation or deactivation of a sub-configuration in an activated CSI report configuration.

In some embodiments, the first MAC CE includes: a third-type bit, in which the third-type bit indicates that the MAC CE is the first MAC CE in a case that the third-type bit is configured with a first bit value.

In some embodiments, the MAC CE further includes a second MAC CE. A second bit value of the third-type bit indicates that the MAC CE is the second MAC CE, and the second MAC CE indicates activation or deactivation of the CSI report configuration.

In some embodiments, the at least one first-type bit is a bitmap, in which one bit in the bitmap indicates activation or deactivation of one sub-configurations; or the at least one first-type bit is joint indication information, in which a sequence value of the at least one first-type bit indicates a combination relationship of activation or deactivation of a plurality of sub-configurations, and the sequence value is determined based on at least one bit value of the at least one first-type bit.

In some embodiments, the at least one first-type bit and the at least one second-type bit are located in different octets of the first MAC CE; a first-type bit carried by one of the octets indicates activation or deactivation of a sub-configuration of one CSI report configuration indicated by one of the at least one second-type bit.

In some embodiments, bits of the first MAC CE form N octets, where N is a positive integer greater than or equal to 3; a first octet of the first MAC CE at least indicates a serving cell identity and/or a bandwidth part (BWP) identity; the at least one second-type bit is located in a second octet of the first MAC CE; a first-type bit of the at least one first-type bit is located in an n-th octet of the first MAC CE; where n is a positive integer greater than or equal to 3 and less than or equal to N.

In some embodiments, identities corresponding to CSI report configurations mapped from a third octet to an N-th octet of the first MAC CE increase progressively; or identities corresponding to CSI report configurations mapped from a third octet to an N-th octet of the first MAC CE decrease progressively.

In some embodiments, the first MAC CE includes M octets, where M is a positive integer greater than or equal to 2; a first-type bit of the at least one first-type bit is located in an m-th octet of the first MAC CE, where m is greater than or equal to 2 and less than or equal to M; a first-type bit in one octet indicates activation or deactivation of a sub-configuration in one CSI report configuration.

In some embodiments, identities corresponding to CSI report configurations mapped from a second octet to an M-th octet of the first MAC CE increase progressively, or identities corresponding to CSI report configurations mapped from a second octet to an M-th octet of the first MAC CE decrease progressively.

In some embodiments, one of the at least one second-type bit indicates activation or deactivation of one CSI report configuration; one octet of the first MAC CE includes the at least one first-type bit and one second-type bit; in which a first-type bit adjacent to an n-th second-type bit and located in the same octet as the n-th second-type bit indicates activation or deactivation of a sub-configuration in a CSI report configuration corresponding to the n-th second-type bit.

In some embodiments, one octet includes two second-type bits; the two second-type bits in the one octet are spaced apart, and one second-type bit corresponds to X first-type bits, where X is a positive integer greater than or equal to 1.

In some embodiments, an LC ID of the first MAC CE is different from an LC ID of a second MAC CE, in which the second MAC CE indicate activation or deactivation of the CSI report configuration.

In some embodiments, the first MAC CE includes a first octet and a second octet; in which the third-type bit is a reserved bit of the first octet, and the at least one first-type bit is at least one reserved bit of the second octet.

FIG. 5 is a schematic diagram of an interaction of a method for processing a CSI report configuration according to an embodiment. As shown in FIG. 5, an embodiment of the present disclosure relates to method for processing a CSI report configuration, and is performed by a terminal in a non-connected state. The method includes step S5101.

Step S5101, a network device sends a MAC CE to the terminal.

In some embodiments, the MAC CE includes a first MAC CE, the first MAC CE carries first information.

In some embodiments, the first information indicates activation or deactivation of a sub-configuration of a CSI report configuration.

In some embodiments, the above method may include the methods of embodiments on the communication system side, the terminal side, the network device side, etc., which is not be repeated here.

In a Rel-18 NES scenario, in order to reduce power overhead of a network device, the network device may dynamically reduce the number of spatial elements or transmitting power corresponding to transmission of downlink data based on a dynamic change in a transmission load, thus reducing network energy overhead. Taking into account a spatial adaptation (SD) pattern for dynamic adjustment of the spatial elements or the transmitting power, Rel-18 defines CSI reporting with a sub-configuration as a granularity. For the same CSI report config, the CSI report configuration may include L sub-configurations, each of which is associated with a specific spatial pattern (SD) and/or a plurality of power consumption (power) patterns.

In order to improve a reporting efficiency of a terminal and reduce the corresponding reporting overhead, for the configured L sub-configurations, a base station may activate/deactivate N out of the L sub-configurations for report via relevant signaling. For SP-CSI reporting, activation/deactivation may be performed via a MAC CE. However, in the existing mechanism, the MAC CE only activates/deactivates reporting with CSI report config as the granularity. After the introduction of reporting with the sub-configuration as the granularity, how to activate/deactivate N out of the L sub-configurations for report is still under further discussion.

The technical problem solved by embodiments of the present disclosure, that is, a core idea of the present disclosure, as described in the background, is to design signaling to indicate an activated/deactivated report sub-configuration in a condition that one CSI report config includes a plurality of report sub-configurations, to improve an efficiency and an accuracy of CSI measurement reporting and achieve consistent understanding between the terminal and the base station.

In the condition that the one CSI report config includes the plurality of report sub-configurations, the terminal receives indication signaling, determines the activated report sub-configuration, and performs the corresponding CSI report.

A reserved bit (e.g., R) field of an existing MAC CE is refarmed, or a new field, such as Ni, is introduced, to indicate an activation/deactivation status of the corresponding sub-configuration in a bitmap manner.

N0 corresponds to a sub-configuration with the smallest sub-configuration identity (sub-configuration id) or the smallest position index in the CSI report config. Ni corresponds to a sub-configuration with the (i+1)th smallest sub-configuration id or the (i+1)th smallest position index in the CSI report configuration.

In a case where Ni is 0, it indicates that the corresponding sub-configuration is deactivated. In a case where Ni is 1, it indicates that the corresponding sub-configuration is activated.

If a MAC CE is enhanced based on the existing MAC CE, the terminal determines an indication function of the MAC CE based on an R field of Oct 1. That is, if the indication is 0, the MAC CE is a legacy MAC CE, which indicates activation/deactivation of the CSI report config, and if the indication is 1, the MAC CE indicates the activation/deactivation of the CSI report sub-configuration.

If a fixed size of the MAC CE is N bits, N is greater than or equal to 16, or corresponds to a variable size.

In the condition that the one CSI report config includes the plurality of report sub-configurations, the base station determines an activated report sub-configuration, transmits a corresponding indication signaling, and receives a corresponding CSI report result.

A reserved bit (e.g., R) field of an existing MAC CE is refarmed, or a new field, such as Ni, is introduced, to indicate an activation/deactivation status of the corresponding sub-configuration in a bitmap manner.

N0 corresponds to a sub-configuration with the smallest sub-configuration identity (sub-configuration id) or the smallest position index in the CSI report config. Ni corresponds to a sub-configuration with the (i+1)th smallest sub-configuration id or the (i+1)th smallest position index in the CSI report configuration.

In a case where Ni is 0, it indicates that the corresponding sub-configuration is deactivated. In a case where Ni is 1, it indicates that the corresponding sub-configuration is activated.

If a MAC CE is enhanced based on the existing MAC CE, the terminal determines an indication function of the MAC CE based on an R field of Oct 1. That is, if the indication is 0, the MAC CE is a legacy MAC CE, which indicates activation/deactivation of the CSI report config, and if the indication is 1, the MAC CE indicates the activation/deactivation of the CSI report sub-configuration.

If a fixed size of the MAC CE is N bits, N is greater than or equal to 16, or corresponds to a variable size.

The following describes a specific implementation of the present disclosure from the perspective of a terminal and a base station.

Assumed that the terminal is a terminal supporting an NES feature. To support measurement reporting of a plurality of spatial patterns (spatial pattern, SD) and/or a plurality of power consumption (power) standards, NES supports sub-CSI report that a plurality of sub-configurations are defined for the same CSI report config. Compared with the existing mechanism, in which one CSI report config corresponds to one CSI, for Rel-18 NES, one CSI report config corresponds to the plurality of sub-configurations, and each sub-configuration corresponds to one sub-CSI report, which may effectively improve dynamic CSI measurement reporting performance.

In a case of configuring the plurality of sub-configurations, embodiments of the present disclosure mainly design corresponding MAC CE indication signaling, based on the existing MAC CE (the existing MAC CE is described in the background), to indicate activation/deactivation of the corresponding sub-configuration, and the specific indication method is described as follows.

Implementation 1: an existing reserved bit, such as "R", is refarmed, to indicate an activation status of a corresponding sub-configuration. It should be noted that the MAC CE indication signaling shown in Implementation 1 may correspond to the MAC CE in the first format and/or the second format of the present disclosure.

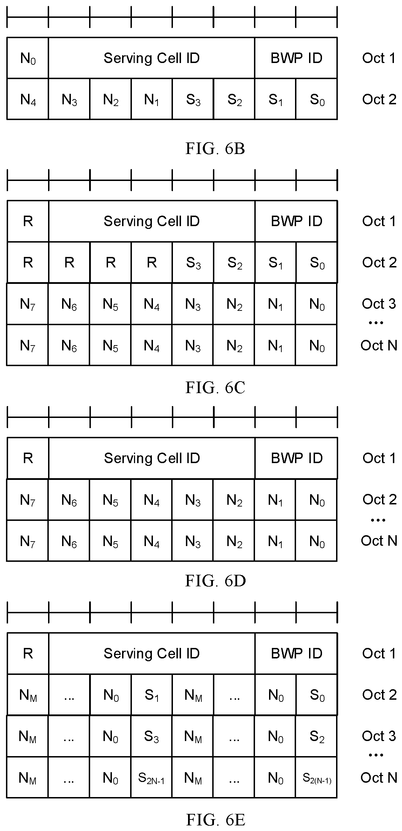

As shown in FIG. 6A and FIG. 6B, FIG. 6A is a schematic diagram of a structure of a MAC CE in a first format according to an embodiment, and FIG. 6B is a schematic diagram of a structure of a MAC CE in a second format according to an embodiment.

N0 corresponds to a sub-configuration with the smallest sub-configuration identity (sub-configuration id) or the smallest position index in the CSI report config. Ni corresponds to a sub-configuration with the (i+1)th smallest sub-configuration id or the (i+1)th smallest position index in the CSI report configuration.

In a case where Ni is 0, it indicates that the corresponding sub-configuration is deactivated. In a case where Ni is 1, it indicates that the corresponding sub-configuration is activated.

Ni may indicate activation or deactivation of a corresponding sub-configuration in all activated CSI report configurations indicated by S0, S1, ..., S3; or, Ni may indicate activation or deactivation of a corresponding sub-configuration in a reference CSI report configuration. In an example, the reference CSI report configuration is determined based on a predefined manner, for example, the CSI report configuration corresponding to the smallest id.

If an index of the corresponding sub-configuration indicated by Ni exceeds an index range of the sub-configuration included in the all activated CSI report configurations indicated by S0, S1, ..., S3 or the reference CSI report configuration, the terminal ignores the corresponding sub-configuration. The CSI report configuration is configured based on the CSI-ReportConfig.

If a MAC CE is enhanced based on the existing MAC CE, the terminal determines an indication function of the MAC CE based on an R field of Oct 1. That is, if the indication is 0, the MAC CE is a legacy MAC CE, which indicates activation/deactivation of the CSI report config, and if the indication is 1, the MAC CE indicates the activation/deactivation of the CSI report sub-configuration.

And/or, if an LC ID corresponding to the MAC CE is different from an LC ID corresponding to the existing MAC CE, the terminal distinguishes different MAC CEs based on the LC ID.

A fixed size of the MAC CE is 16 bits.

Implementation 2: a corresponding field is added to indicate an activation status of the corresponding sub-configuration. It should be noted that the MAC CE indication signaling shown in Implementation 2 may correspond to the MAC CE in the third format of the present disclosure.

As shown in FIG. 6C. FIG. 6C is a schematic diagram of a structure of a MAC CE in a third format according to an embodiment.

N0 corresponds to a sub-configuration with the smallest sub-configuration identity (sub-configuration id) or the smallest position index in the CSI report config. Ni corresponds to a sub-configuration with the (i+1)th smallest sub-configuration id or the (i+1)th smallest position index in the CSI report configuration.

In a case where Ni is 0, it indicates that the corresponding sub-configuration is deactivated. In a case where Ni is 1, it indicates that the corresponding sub-configuration is activated.

N0, ..., N7 in Oct 3 may correspond to a plurality of sub-configurations in the CSI report config corresponding to the minimum CSI configuration identify in the activated CSI report config configurations indicated by S0, S1, ..., S3, or may correspond to a plurality of sub-configurations in the CSI report config corresponding to the minimum CSI configuration identify in a report configuration set.

N0, ..., N7 in Oct 4 may correspond to a plurality of sub-configurations in the CSI report configuration corresponding to the second smallest CSI configuration identify in the activated CSI report configurations indicated by S0, S1, ..., S3, or may correspond to a plurality of sub-configurations in the CSI report configurations corresponding to the second smallest CSI configuration identify in a report configuration set.

If an index of the corresponding sub-configuration indicated by Ni exceeds an index range of the sub-congratulation included in all activated CSI report configurations indicated by S0, S1, ..., S3 or the CSI report configuration corresponding to the report configuration, the terminal ignores the corresponding sub-congratulation. The CSI report config is configured based on the CSI-ReportConfig.

If a MAC CE is enhanced based on the existing MAC CE, the terminal determines an indication function of the MAC CE based on an R field of Oct 1. That is, if the indication is 0, the MAC CE is a legacy MAC CE, which indicates activation/deactivation of the CSI report config, and if the indication is 1, the MAC CE indicates the activation/deactivation of the CSI report sub-configuration of the CSI report configuration.

And/or, if an LC ID corresponding to the MAC CE is different from an LC ID corresponding to the existing MAC CE, the terminal distinguishes different MAC CEs based on the LC ID.

A fixed size of the MAC CE is N bits, where N is greater than or equal to 16, or corresponds to a variable size.

It should be noted that the legacy MAC CE may correspond to the second MAC CE in the present disclosure.

Implementation 3: a corresponding field is added to indicate an activation status of the corresponding sub-configuration. It should be noted that the MAC CE indication signaling shown in Implementation 3 may correspond to the MAC CE in the fourth format of the present disclosure.

As shown in FIG. 6D. FIG. 6D is a schematic diagram of a structure of a MAC CE in a fourth format according to an embodiment.

N0 corresponds to a sub-configuration with the smallest sub-configuration identity (sub-configuration id) or the smallest position index in the CSI report config. Ni corresponds to a sub-configuration with the (i+1)th smallest sub-configuration id or the (i+1)th smallest position index in the CSI report configuration.

In a case where Ni is 0, it indicates that the corresponding sub-configuration is deactivated. In a case where Ni is 1, it indicates that the corresponding sub-configuration is activated.

N0, ..., N7 in Oct 2 may correspond to a plurality of sub-configurations in the CSI report config corresponding to the minimum id in a report configuration set.

N0, ..., N7 in Oct 3 may correspond to a plurality of sub-configurations in the CSI report config corresponding to the second smallest id in the report configuration set.

If an index of the corresponding sub-congratulation indicated by Ni exceeds an index range of the sub-congratulation included in the corresponding CSI report config, the terminal ignores the corresponding sub-congratulation. The CSI report config is configured based on the CSI-ReportConfig.

If a MAC CE is enhanced based on the existing MAC CE, the terminal determines an indication function of the MAC CE based on an R field of Oct 1. That is, if the indication is 0, the MAC CE is a legacy MAC CE, which indicates activation/deactivation of the CSI report config, and if the indication is 1, the MAC CE indicates the activation/deactivation of the CSI report sub-configuration.

And/or, if an LC ID corresponding to the MAC CE is different from an LC ID corresponding to the existing MAC CE, the terminal distinguishes different MAC CEs based on the LC ID.

A fixed size of the MAC CE is N bits, where N is greater than or equal to 16, or corresponds to a variable size.

Implementation 4: a corresponding field is added to indicate an activation status of the corresponding sub-configuration. It should be noted that the MAC CE indication signaling shown in Implementation 4 may correspond to the MAC CE in the fifth format of the present disclosure.

As shown in FIG. 6E. FIG. 6E is a schematic diagram of a structure of a MAC CE in a fifth format according to an embodiment.
in which:
N0 corresponds to a sub-configuration with the smallest sub-configuration identity (sub-configuration id) or the smallest position index in the CSI report config. Ni corresponds to a sub-configuration with the (i+1)th smallest sub-configuration id or the (i+1)th smallest position index in the CSI report configuration.

In a case where Ni is 0, it indicates that the corresponding sub-configuration is deactivated. In a case where Ni is 1, it indicates that the corresponding sub-configuration is activated.

N0,...,N_{M} adjacent to S0 in Oct 2 may correspond to a plurality of sub-configurations in the an CSI report config indicated by S0.

N0,...,N_{M} adjacent to S1 in Oct 2 may correspond to a plurality of sub-configurations in an activated CSI report config indicated by S1.

If an index of the corresponding sub-congratulation indicated by Ni exceeds an index range of the sub-congratulation included in the corresponding CSI report config, the terminal ignores the corresponding sub-congratulation. The CSI report config is configured based on the CSI-ReportConfig.

If a MAC CE is enhanced based on the existing MAC CE, the terminal determines an indication function of the MAC CE based on an R field of Oct 1. That is, if the indication is 0, the MAC CE is a legacy MAC CE, which indicates activation/deactivation of the CSI report config, and if the indication is 1, the MAC CE indicates the activation/deactivation of the CSI report sub-configuration.

And/or, if an LC ID corresponding to the MAC CE is different from an LC ID corresponding to the existing MAC CE, the terminal distinguishes different MAC CEs based on the LC ID.

A fixed size of the MAC CE is N bits, where N is greater than or equal to 16, or corresponds to a variable size.

In this embodiment, for a Rel-18 NES scenario, a corresponding MAC CE signaling is designed to indicate the activation/deactivation of the sub-configuration. The terminal performs CSI measurement reporting based on indication information.

For the terminal, in a case that one CSI report config includes a plurality of report sub-configurations, the terminal receives an indication signaling, determines an activated report sub-configuration, and performs the corresponding CSI report.

For the network device, under the condition that a CSI report config includes a plurality of reporting sub-configurations, the base station determines the activated reporting sub-configuration, transmits the corresponding indication signaling, and receives the CSI reporting result.

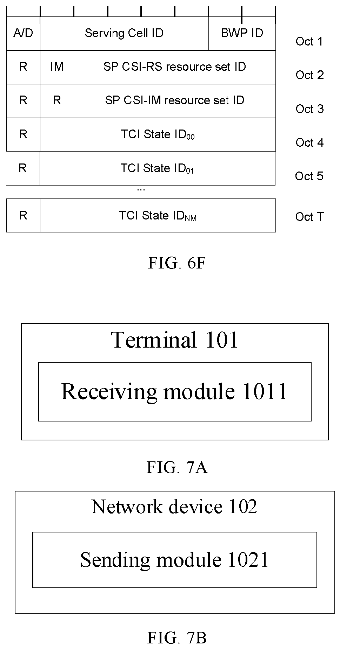

Implementation 5: a method for indicating a transmission configuration indication (TCI) state corresponding to a CSI reporting sub-configuration, wherein the indication is performed via a MAC CE. For example, the corresponding MAC CE is shown in FIG. 6F.

A/D: This field indicates the semi-persistent CSI-RS and CSI interference measurement (IM) resource set. The A/D field is set to 1 to indicate activation, otherwise it indicates deactivation.

Serving Cell ID: This field indicates the identity of the Serving Cell for which the MAC CE applies. The length of the field is 5 bits;
BWP ID: This field indicates a UL BWP for which the MAC CE applies as the codepoint of the DCI bandwidth part indicator field as specified in TS 38.212 [9]. The length of the BWP ID field is 2 bits;
SP CSI-RS resource set ID: This field contains the index of NZP-CSI-RS-resourceset, including the Semi Persistent NZP CSI-RS resource set, indicating that the resource set can be activated or deactivated. The length of this field is 6 bits.

Interference Measurement (IM): This field indicates the presence of an octet containing the SP CSI-IM Resource Set ID. If this field is set to 1, then an octet containing the SP CSI-IM Resource Set ID field is present. When this field is set to 0, it indicates that the SP CSI-IM Resource Set ID field is not present.

Semi-persistent CSI-IM resource set ID (SP CSI-IM resource set ID): This field includes the CSI-IM-resourceset index containing the semi-persistent CSI-IM resources, indicating the activation or deactivation of the semi-persistent CSI-IM resource set. The length of this field is 6 bits.

TCI State ID: This field contains the TCI state identifier of the TCI state as the QCL source for the SD mode of the resources in the semi-persistent NZP CSI-RS resource set (indicated by the SP CSI-RS Resource Set ID field). TCI State ID00 indicates the TCI state of the first SD mode of the first resource in the set, TCI State ID01 indicates the TCI state of the second SD mode of the first resource, and so on. The length of this field is 7 bits. This field is not present if the A/D field is set to 0.

R: indicates a reserved field, and the bit value is set to 0.

Embodiments of the disclosure also provide an apparatus for implementing any one of the above methods. For example, an apparatus is provided, the apparatus includes units or modules for performing the steps executed by the terminal in any one of the above methods. In this case, the apparatus may be configured in the terminal. Furthermore, another apparatus is provided, the apparatus includes units or modules for performing the steps executed by the network device in any one of the above methods. In this case, the apparatus may be configured in the network device (such as an access network device, or a core network device, etc.).

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a schematic diagram illustrating a structure of a terminal according to an embodiment of the disclosure. As illustrated in FIG. 7A, the terminal 101 includes a receiving module 1011. The receiving module 1011 is configured to receive an MAC CE sent by a network device, in which the MAC CE includes a first MAC CE, the first MAC CE carries first information, the first information indicates activation or deactivation of a sub-configuration corresponding to a CSI report configuration.

In some embodiments, the receiving module 1011 is used to execute steps related to information sending and receiving performed by the terminal in any of the above method for processing a CSI report configuration, which may not be repeated herein.

FIG. 7B is a schematic diagram illustrating a structure of a network device according to an embodiment of the disclosure. As illustrated in FIG. 7B, the network device 104 includes a sending module 1021. The sending module 1021 is configured to send an MAC CE to a terminal, in which the MAC CE includes a first MAC CE, the first MAC CE carries first information, the first information indicates activation or deactivation of a sub-configuration of a CSI report configuration.

In some embodiments, the sending module 1021 is used to execute steps related to information sending and receiving performed by the network device in any of the above method for processing a CSI report configuration, which may not be repeated herein.

In some embodiments, the network device 102 further includes one or more processing modules that may be used for information processing.

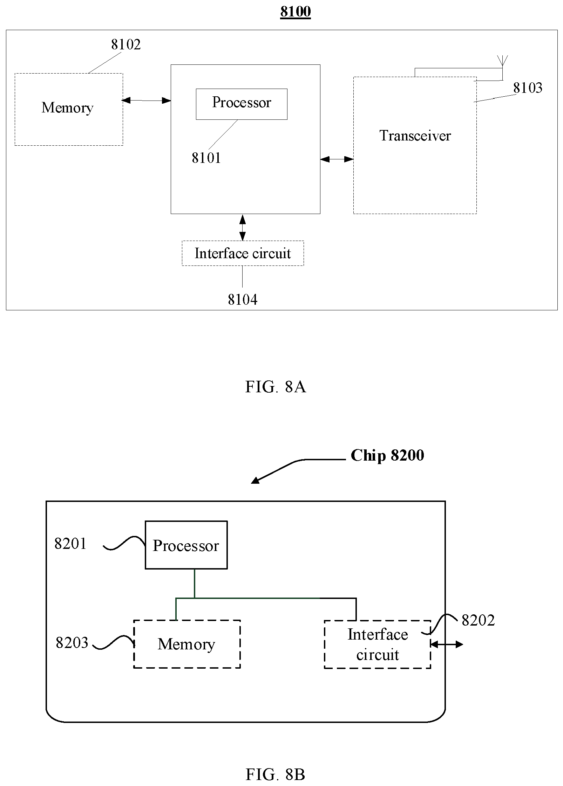

FIG. 8A is a schematic diagram illustrating a structure example of a communication device 8100 according to an embodiment of the disclosure. The communication device 8100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the information indication method in the above method embodiments. For details, reference may be made to the description in the above method embodiments.

As shown in FIG. 8A, the communication device 8100 may include one or more processors 8101. The processor 8101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU, or CU, etc.), execute a computer program, and process data of the computer program. The processor 8101 is configured to invoke instructions to enable the communication device 8100 to execute any of the above communication methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method, and the processor 8101 performs at least one of other steps.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited, and a structure of the communication device 8100 may not be limited by FIG. 8A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 8B is a schematic diagram illustrating a structure of a chip 8200 provided in an embodiment of the present disclosure. In a case where the communication device 8100 may be a chip or a chip system, reference may be made to the schematic diagram of the structure of the chip 8200 shown in FIG. 8B, but the present disclosure is not limited thereto.

The chip 8200 includes one or more processors 8201, and the one or more processors 8201 are used to call instructions to cause the chip 8200 to perform any of the above communication methods.

In some embodiments, the chip 8200 further includes one or more interface circuits 8202, the one or more interface circuits 8202 are connected to a memory 8203, the one or more interface circuits 8202 may be used to receive signals from the memory 8203 or other devices, and the one or more interface circuits 8202 may be used to send signals to the memory 8203 or other devices. For example, the one or more interface circuits 8202 may read the instructions stored in the memory 8203 and send the instructions to the processor 8201. Optionally, the terms such as interface circuit, interface, transceiver pin, transceiver, etc. may be replaced with each other.

In some embodiments, the chip 8200 further includes one or more memories 8203 for storing instructions. Optionally, all or part of the memories 8203 may be outside the chip 8200.

The disclosure also provides a storage medium for storing instructions. When the instructions are running on the communication device 8100, the communication device 8100 is caused to implement any one of the above methods. In an example, the above storage medium is an electronic storage medium. In an example, the above storage medium is a computer-readable storage medium, which is not limited herein. The above storage medium may also be a storage medium readable by other devices. In an example, the above storage medium may be a non-transitory storage medium, which is not limited to herein. The above storage medium may also be a transitory storage medium.

The disclosure also provides a program product. When the program product is executed by the communication device 8100, the communication device 8100 is caused to implement any one of the above methods. In an example, the above program product is a computer program product.

The disclosure also provides a computer program. When the computer program is running on a computer, the computer is caused to implement any one of the above methods.

Other implementations of the disclosure will be apparent to the skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It should be understood that, the disclosure is not limited to the exaction construction that has been described above and illustrated in the accompanying drawings, and that various modifications and changes may be made without departing from the scope thereof. The scope of the disclosure only is limited by the appended claims.

## Claims

1. A method for processing a channel state information (CSI) report configuration, comprising:
sending, by a network device, a media access control (MAC) control element (CE) to a terminal, wherein the MAC CE comprises a first MAC CE, the first MAC CE carries first information, the first information indicates activation or deactivation of a sub-configuration of the CSI report configuration.

2. The method according to claim 1, wherein the first MAC CE comprises:
at least one first-type bit, indicating activation or deactivation of the sub-configuration.

3. The method according to claim 2, wherein the first MAC CE further comprises:
at least one second-type bit, indicating activation or deactivation of the CSI report configuration;
wherein the at least one first-type bit specifically indicates activation or deactivation of a sub-configuration in an activated CSI report configuration.

4. The method according to claim 1, 2 or 3, wherein the MAC CE sent by the network device comprises:
a third-type bit, wherein the third-type bit indicates that the MAC CE is the first MAC CE in a case that the third-type bit is configured with a first bit value.

5. The method according to claim 4, wherein the third-type bit indicates that the MAC CE sent by the network device is a second MAC CE in a case where the third-type bit is configured with a second bit value, and the second MAC CE indicates activation or deactivation of the CSI report configuration.

6. The method according to claim 2, wherein
the at least one first-type bit is a bitmap, wherein one bit in the bitmap indicates activation or deactivation of one sub-configurations; or
the at least one first-type bit is joint indication information, wherein a sequence value of the at least one first-type bit indicates a combination relationship of activation or deactivation of a plurality of sub-configurations, and the sequence value is determined based on at least one bit value of the at least one first-type bit.

7. The method according to claim 3 or 4, wherein the at least one first-type bit and the at least one second-type bit are located in different octets of the first MAC CE;
a first-type bit carried by one of the octets indicates activation or deactivation of a sub-configuration of one CSI report configuration indicated by one of the at least one second-type bit.

8. The method according to claim 7, wherein bits of the first MAC CE form N octets, where N is a positive integer greater than or equal to 3;
a first octet of the first MAC CE at least indicates a serving cell identity and/or a bandwidth part (BWP) identity;
the at least one second-type bit is located in a second octet of the first MAC CE; and
a first-type bit of the at least one first-type bit is located in an n-th octet of the first MAC CE;
where n is a positive integer greater than or equal to 3 and less than or equal to N.

9. The method according to claim 8, wherein
identities corresponding to CSI report configurations mapped from a third octet to an N-th octet of the first MAC CE increase progressively; or
identities corresponding to CSI report configurations mapped from a third octet to an N-th octet of the first MAC CE decrease progressively.

10. The method according to claim 2, wherein the first MAC CE comprises M octets, where M is a positive integer greater than or equal to 2;
a first-type bit of the at least one first-type bit is located in an m-th octet of the first MAC CE, where m is greater than or equal to 2 and less than or equal to M;
a first-type bit in one octet indicates activation or deactivation of a sub-configuration in one CSI report configuration.

11. The method according to claim 10, wherein
identities corresponding to CSI report configurations mapped from a second octet to an M-th octet of the first MAC CE increase progressively, or
identities corresponding to CSI report configurations mapped from a second octet to an M-th octet of the first MAC CE decrease progressively.

12. The method according to claim 3, wherein one of the at least one second-type bit indicates activation or deactivation of one CSI report configuration;
one octet of the first MAC CE comprises the at least one first-type bit and one second-type bit; wherein
a first-type bit adjacent to an n-th second-type bit and located in the same octet as the n-th second-type bit indicates activation or deactivation of a sub-configuration in a CSI report configuration corresponding to the n-th second-type bit.

13. The method of claim 12, wherein one octet comprises two second-type bits;
the two second-type bits in the one octet are spaced apart, and one second-type bit corresponds to X first-type bits, where X is a positive integer greater than or equal to 1.

14. The method according to claim 1, wherein a logical channel identifier (LC ID) of the first MAC CE is different from an LC ID of a second MAC CE, wherein the second MAC CE indicate activation or deactivation of the CSI report configuration.

15. The method according to any one of claims 2 to 6, wherein the at least one first-type bit is at least one reserved bit of the first MAC CE.

16. The method of claim 4, wherein the first MAC CE comprises a first octet and a second octet;
wherein the third-type bit is a reserved bit of the first octet, and the at least one first-type bit is at least one reserved bit of the second octet.

17. A method for processing a channel state information (CSI) report configuration, comprising:
receiving a media access control (MAC) control element (CE) sent by a network device, wherein the MAC CE comprises a first MAC CE, the first MAC CE carries first information, the first information indicates activation or deactivation of a sub-configuration corresponding to the CSI report configuration.

18. The method according to claim 17, wherein the first MAC CE comprises:
at least one first-type bit, indicating activation or deactivation of the sub-configuration.

19. The method according to claim 18, wherein the first MAC CE further comprises:
at least one second-type bit, indicating activation or deactivation of the CSI report configuration;
wherein the at least one first-type bit specifically indicates activation or deactivation of a sub-configuration in an activated CSI report configuration.

20. The method according to claim 17, 18 or 19, wherein the MAC CE sent by the network device comprises:
a third-type bit, wherein the third-type bit indicates that the MAC CE sent by the network device is the first MAC CE in a case that the third-type bit is configured with a first bit value.

21. The method according to claim 20, wherein the third-type bit indicates that the MAC CE sent by the network device is a second MAC CE in a case where the third-type bit is configured with a second bit value, and the second MAC CE indicates activation or deactivation of the CSI report configuration.

22. The method according to claim 18, wherein
the at least one first-type bit is a bitmap, wherein one bit in the bitmap indicates activation or deactivation of one sub-configurations; or
the at least one first-type bit is joint indication information, wherein a sequence value of the at least one first-type bit indicates a combination relationship of activation or deactivation of a plurality of sub-configurations, and the sequence value is determined based on at least one bit value of the at least one first-type bit.

23. The method according to claim 19 or 20, wherein the at least one first-type bit and the at least one second-type bit are located in different octets of the first MAC CE;
a first-type bit carried by one of the octets indicates activation or deactivation of a sub-configuration of one CSI report configuration indicated by one of the at least one second-type bit.

24. The method according to claim 23, wherein bits of the first MAC CE form N octets;
a first octet of the first MAC CE at least indicates a serving cell identity and/or a bandwidth part (BWP) identity;
the at least one second-type bit is located in a second octet of the first MAC CE; and
a first-type bit of the at least one first-type bit is located in an n-th octet of the first MAC CE;
where n is a positive integer greater than or equal to 3 and less than or equal to N.

25. The method according to claim 24, wherein
identities corresponding to CSI report configurations mapped from a third octet to an N-th octet of the first MAC CE increase progressively; or
identities corresponding to CSI report configurations mapped from a third octet to an N-th octet of the first MAC CE decrease progressively.

26. The method according to claim 18, wherein the first MAC CE comprises M octets, where M is a positive integer greater than or equal to 2;
a first-type bit of the at least one first-type bit is located in an m-th octet of the first MAC CE, where m is greater than or equal to 2 and less than or equal to M;
a first-type bit in one octet indicates activation or deactivation of a sub-configuration in one CSI report configuration.

27. The method according to claim 26, wherein
identities corresponding to CSI report configurations mapped from a second octet to an M-th octet of the first MAC CE increase progressively, or
identities corresponding to CSI report configurations mapped from a second octet to an M-th octet of the first MAC CE decrease progressively.

28. The method according to claim 19, wherein one of the at least one second-type bit indicates activation or deactivation of one CSI report configuration;
one octet of the first MAC CE comprises the at least one first-type bit and one second-type bit; wherein
a first-type bit adjacent to an n-th second-type bit and located in the same octet as the n-th second-type bit indicates activation or deactivation of a sub-configuration in a CSI report configuration corresponding to the n-th second-type bit.

29. The method of claim 28, wherein one octet comprises two second-type bits;
the two second-type bits in the one octet are spaced apart, and one second-type bit corresponds to X first-type bits, where X is a positive integer greater than or equal to 1.

30. The method according to claim 17, wherein a logical channel identifier (LC ID) of the first MAC CE is different from an LC ID of a second MAC CE, wherein the second MAC CE indicate activation or deactivation of the CSI report configuration.

31. The method according to any one of claims 18 to 23, wherein the at least one first-type bit is at least one reserved bit of the first MAC CE.

32. The method of claim 20, wherein the first MAC CE comprises a first octet and a second octet;
wherein the third-type bit is a reserved bit of the first octet, and the at least one first-type bit is at least one reserved bit of the second octet.

33. A method for processing a channel state information (CSI) report configuration, comprising:
a network device sending a media access control (MAC) control element (CE) to a terminal, wherein the MAC CE comprises a first MAC CE, the first MAC CE carries first information, the first information indicates activation or deactivation of a sub-configuration of the CSI report configuration.

34. A network device, comprising: a sending module, configured to send a media access control (MAC) control element (CE) to a terminal, wherein the MAC CE comprises a first MAC CE, the first MAC CE carries first information, the first information indicates activation or deactivation of a sub-configuration of a channel state information (CSI) report configuration.

35. A terminal, comprising: a receiving module, configured to receive a media access control (MAC) control element (CE) sent by a network device, wherein the MAC CE comprises a first MAC CE, the first MAC CE carries first information, the first information indicates activation or deactivation of a sub-configuration corresponding to a channel state information (CSI) report configuration.

36. A communication system, comprising a terminal and a network device, wherein the network device is configured to implement the method for processing the channel state information (CSI) report configuration according to any one of claims 1 to 16, and the terminal is configured to implement the method for processing the CSI report configuration according to any one of claims 17 to 32.

37. A communication device, comprising:
one or more processors, configured to call instructions to cause the communication device to implement the method for processing the channel state information (CSI) report configuration according to any one of claims 1 to 16 or any one of claims 17 to 32.

38. A storage medium, storing instructions that, when executed on a communication device, cause the communication device to implement the method for processing the channel state information (CSI) report configuration according to any one of claims 1 to 16 or any one of claims 17 to 32.
